# EUROPÄISCHE PATENTANMELDUNG

(11) **EP 0 964 174 A2**
(43) Veröffentlichungstag der Anmeldung: **15.12.1999**
(21) Anmeldenummer: 99110823.4
(22) Anmeldetag: 05.06.1999
(51) Int. Cl.: F16C 25/08

(54) **Verfahren zur Verstimmung der Eigenfrequenz eines Drehteils sowie stimmbares Drehteil**

(30) Priorität: 13.06.1998 DE 19826176
(71) Anmelder: DaimlerChrysler AG, 70567 Stuttgart (DE)
(72) Erfinder: Schnur, Jürgen, 71254 Ditzingen (DE); Tomaschko, Silvia Dr., 89075 Ulm (DE)

(57) **Zusammenfassung**

Die Erfindung betrifft ein Verfahren zur Verstimmung der Eigenfrequenz eines Drehteils (2), welches drehbar in dem Wellenlager (4,5) gelagert ist, und bei dem die Rotationsachse des Drehteils (2) achsgleich zur Rotationsachse des Wellenlagers (4,5) angeordnet wird, sowie ein entsprechend stimmbares Drehteil (2). Zum Ausgleich eines axialen Spiels und/oder einer störenden Geräuschkulisse werden die Einspannverhältnisse durch eine reversible Änderung der axialen Erstreckung und/oder des axialen Anpreßdrucks einer Axialverstelleinheit (31) an das Drehteil (2) verändert, wobei die Axialverstelleinheit (31) aus einem piezoelektrisch aktiven Material gefertigt ist.

## Beschreibung

Die Erfindung betrifft ein Verfahren zur Verstimmung der Eigenfrequenz eines Drehteils, welches drehbar in dem Wellenlager gelagert ist, und bei dem die Rotationsachse des Drehteils achsgleich zur Rotationsachse des Wellenlagers angeordnet wird sowie ein stimmbares Drehteil, das drehbar in dem Wellenlager gelagert ist, und bei dem die Rotationsachse des Drehteils achsgleich zur Rotationsachse des Wellenlagers angeordnet ist gemäß den Oberbegriffen der Ansprüche 1 bzw. 6.

Im Maschinenbau sind Drehteile im allgemeinen unter Zuhilfenahme von Wellen- bzw. Drehlagern wie Kugellager, Kegelrollenlager, Gleitlager usw. drehbar gehaltert. Bei den Drehteil/Wellenlager-Verbindungen können Veränderungen der Einspannverhältnisse, wie bspw. ein Spiel, auftreten. Die Veränderungen sind i.a. nicht statisch, sondern können sich insbesondere durch thermische Effekte verändern. Mit der Veränderung der Einspannverhältnisse des Drehteils in dem Wellenlager sind verschiedene Effekte verbunden. So verändern sich insbesondere die Eigenfrequenzen und/oder die Schwingungsamplituten des Drehteils. Bislang wird ein Ausgleich der auftretenden Veränderungen dadurch erreicht, daß die Drehteil/Wellenlager-Verbindung insbesondere durch eine Feder oder durch eine Materialelastizität vorgespannt wird, wobei die Vorspannung zum Teil auf Lagerschalen wirkt.

Derartige Ausgleichsvorrichtung sind bspw. aus der DE 195 41 245 A1, der DE 38 10 448 C2, dem DE 93 01 334 U1 oder der DE 31 23 590 A1 bekannt.

Desweiteren weisen Maschinen mit rotierenden Teile zumindest meistens eine gewisse störende Geräuschkulisse auf. Ein Grund für diese Störgeräusche liegt u.a. daran, daß die rotierenden Drehteile, insbesondere Wellen, Schwingungen in andere Bauteile einleiten. Zur Übertragung von Schwingungen zwischen Bauteilen bzw. zur Einleitung von Schwingungen von einem Bauteil in ein anderes Bauteil sind Resonanzfrequenzen wichtig. Die mathematische Zusammenhang dieser frequenzabhängigen Übertragung wird Übertragungsfunktion genannt.

Aus der US 5,332,061 A1 ist Verfahren zur Unterdrückung von in die Karosserie eingeleiteten Vibrationen und ein entsprechendes Fahrzeug bekannt. Die betreffenden eingeleiteten Vibrationen stammen vom Motor und hierbei insbesondere von der sich bewegenden Teilen wie der rotierenden Kurbel- oder Nockenwelle. Die Vibrationen werden an den Verbindungspunkten des Motors mit der Karosserie übertragen. Zu Dämpfung dieser Vibrationen weist das Fahrzeug Shaker, also mechanische Schwingungserreger auf, die im Bereich von zumindest einigen Verbindungspunkten des Motors mit der Karosserie angeordnet sind. Beim Betreiben des Motors werden die Shaker in Abhängigkeit von der Motorendrehzahl bei den Resonsanzfrequenzen gegenphasig zu den vom Motor kommenden Vibrationen erregt, wodurch die Übertragung der eingeleiteten Vibrationen zumindest gedämpft werden. Die entsprechenden Frequenzen und deren Amplituten für die gezielt eingeleiteten künstlichen Sekundär-Schwingungen werden hierbei einem zuvor niedergelegten Datenfeld entnommen.

Aus der US 5,434,783 A1 ist ein Fahrzeug bekannt, bei dem die innerhalb einer Fahrgastzelle hörbare Geräuschkulisse durch Schallwellen beeinflußt wird. Neben normalen Lautsprechern wird hier auch ein Piezoelement verwendet, daß die Karosserie zumindest bereichsweise zu Schwingungen anregt und dadurch zur Aussendung von Schallwellen beeinflußt; d.h. das Piezoelement wirkt wie die Spule eines Lautsprechers, während die Karosserie die schwingende Membran darstellt. Mit dem vorbekannten Verfahren und der vorbekannten Vorrichtung wird eine Verbesserung des subjektiven Empfindens innerhalb der Fahrgastzelle erreicht.

Eine weiterführende Ausbildung der obigen Entwicklung zur Beeinflussung des subjektiv wahrgenommenen Fahreindrucks ist aus der DE 195 31 402 A1 bekannt. Gemäß dieser Schrift wird in Abhängigkeit eines Parameters und hierbei insbesondere der Motordrehzahl und/oder der Geschwindigkeit nicht nur der Luftschall, sondern auch der mit dem Körper wahrgenommenen Körperschall bzw. Vibrationen beeinflußt. Hierzu wird je nach Größe des Parameters aus einem Datenfeld bestimmte Daten ausgelesen und unter Zuhilfenahme von Schwingungserregern in u.a. auch körperwahrnehmbaren künstliche Schwingungen umgesetzt. Durch diese Maßnahmen können in Verbindung mit der Beeinflussung des akustisch wahrgenommenen Luftschalls sowohl positive als auch negative Interferenzen der gezielt eingeleiteten künstlichen Sekundär-Schwingungen mit den beim Betreiben des Fahrzeuges fahrzeugseitig sich bildenden Primär-Schwingungen erzeugt werden. Die Interferenzen können je nach Wunsch den wahrgenommenen Eindruck verringern oder aber einen bestimmten Eindruck, bspw. ein Schalten bei mit einem stufenlosen Getriebe versehenen Fahrzeug, vortäuschen.

Die Aufgabe der Erfindung ist es, ein Verfahren zu entwickeln, mit dem Weise die wahrnehmbaren Schwingungen einer rotierende Drehteile aufweisenden Maschine und gleichfalls ein ggf. auftretendes axiales Spiel zumindest verringert werden kann. Desweiteren ist es Aufgabe der Erfindung, eine neuartige Vorrichtung vorzuschlagen, mit der ebenfalls wahrnehmbaren Schwingungen und gleichfalls ein ggf. auftretendes axiales Spiel zumindest verringert werden kann.

Die Aufgabe wird erfindungsgemäß mit einem Verfahren gemäß Anspruch 1 und mit einem Wellenlager gemäß Anspruch 6 gelöst. Durch die gezielte und reversible Änderung der einer insbesondere Piezoelemente aufweisenden Axialverstelleinheit bzw. des auf das Drehteil axial einwirkenden Anpreßdrucks, können die axialen Einspannverhältnisse während des Betriebs durch einen gezielten Eingriff von außen verändert werden. Die Veränderung der Einspannungsverhältnisse bewirkt bspw., daß die Werte der Eigenschwingungen des Drehteils und auch Übertragungsfunktion vom Drehteil an ein weiteres Bauteil verändert werden. Durch die Veränderung der Übertragungsfunktion ist die Weiterleitung von Schwingungen, also der übertragbaren Energie, die von dem Drehteil kommen, in ein anderes Bauteil verändert, insbesondere zumindest vermindert.

Bei der Axialverstelleinheit erfolgt der Eingriff durch das Anlegen einer elektrischen Spannung. Diese Maßnahme führt zu einer Veränderung der Resonanz- bzw. Eigenfrequenzen des Drehteils und ebenfalls zu einer Veränderung bei der Übertragung bzw. Einleitung von Schwingungen. Zur Übertragung von Schwingungen zwischen Bauteilen bzw. zur Einleitung von Schwingungen von einem Bauteil in ein anderes Bauteil sind die jeweiligen Resonanzfrequenzen wichtig. Der mathematische Zusammenhang dieser frequenzabhängigen Energie- bzw. Schwingungs-Übertragung wird Übertragungsfunktion genannt.

Durch diesen Eingriff ist also die Resonanz zwischen dem Drehteil und der die Schwingungen weiterleitenden Umgebung gestört, wodurch die insbesondere als störend wahrnehmbare Geräuschkulisse verringert ist. Da bei einem vorliegenden Axialspiel die Veränderung der axialen Einspannverhältnisse durch eine Axialbewegung zumindest eines Teiles der Axialverstelleinheit verbunden ist, kann gleichzeitig zumindest eine Reduzierung dieses Axialspiels erreicht werden.

Dies ist vorzugsweise bei einer Kurbel- und/oder Nockenwelle einer Brennkraftmaschine, vorzugsweise eines Diesel- oder Benzinmotors als Drehteil sinnvoll, da hier dann auf einfache Weise die eingeleiteten Schwingungen und hiervon insbesondere die Schallemission innerhalb einer Fahrgastzelle einer brennkraftbetriebenen Fahrzeuges beeinflußt werden kann.

Eine Verwendung dieses Verfahrens bzw. dieser Vorrichtung ist zweckmäßigerweise bei Drehteilen von Elektromotoren wie insbesondere Rotoren aber auch in Flugzeugtriebwerken, bspw. Düsentriebwerken oder Propeller gegeben.

In bevorzugter Weise ist der Einsatz die Erfindung auch bei einer Kurbel- und/oder Nockenwelle einer Brennkraftmaschine, vorzugsweise eines Diesel- oder Benzinmotors als Drehteil zweckmäßig, da hier dann auf einfache Weise die eingeleiteten Schwingungen und hiervon insbesondere die Schallemission innerhalb einer Fahrgastzelle eines brennkraftbetriebenen Fahrzeuges beeinflußt werden kann. Vorzugsweise erfolgt hier die Beeinflussung der vom Betreiber eines Fahrzeuges insbesondere als störend wahrnehmbaren und zumindest zum Teil vom Motor kommenden Geräuschpegels am Ort des Entstehens und nicht wie bislang üblich, erst am Ort der Wahrnehmung durch den Betreiber. Hierdurch ist in günstiger Weise u.a. der Aufwand hinsichtlich der Steuerelektronik und des apparativen Aufbaus (Mikrophon, Lautsprecher und dgl.) verringert.

Sinnvolle Ausgestaltungen der Erfindung sind den Unteransprüchen entnehmbar. Im übrigen wird die Erfindung anhand von in den Zeichnungen dargestellten Ausführungsbeispielen näher erläutert. Dabei zeigt
- Fig. 1: eine stirnseitige Aufnahme eines Drehteils mit innenseitig angeordneter Axialverstelleinheit in einem umgebenden Bauteil,
- Fig. 2: eine weitere stirnseitige Aufnahme eines Drehteils,
- Fig. 3: eine Axialverstelleinheit, die in der Art einer Dichtung mit integrierten Piezoelementen ausgeführt ist,
- Fig. 4: eine Axialverstelleinheit, die in der Art einer Dichtung mit integrierten und orientierten Piezoelementen ausgeführt ist und
- Fig. 5: eine Axialverstelleinheit und deren Ausschnittsvergrößerung, wobei die Axialverstelleinheit in der Art einer Dichtung mit integrierten und orientierten Piezoelementen sowie mit integrierten Kontakten ausgeführt ist.

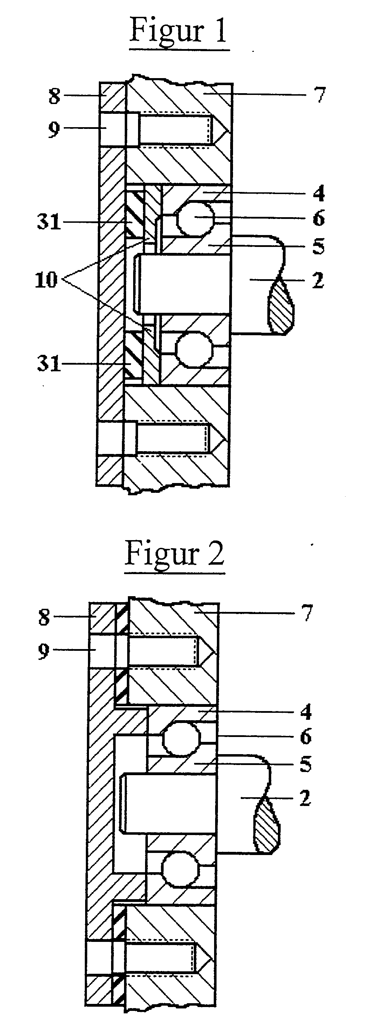

In Figur 1 ist eine stirnseitige Aufnahme eines Drehteils 2 in einem umgebenden Bauteil 7 dargestellt. Das Drehteil 2 weist einen Anschlag auf, an dem sich der Radius sprungartig ändert. Der Anschlag des Drehteils liegt direkt an dem Innenring 5 des Wellenlagers an und ist dadurch in Axialrichtung spielfrei im Wellenlager angeordnet. Das Wellenlager weist eine Außenschale 4, eine Innenschale 5, eine sowie zwischen der Außenschale 4 und der Innenschale 5 rollbar angeordnete Kugeln 6 auf.

Die Innenschale 5 und die Außenschale 4 weisen jeweils nur eine quer zu ihrer Rotationsachse liegende Anlage- bzw. Gleitfläche für die Kugeln 6 auf. Durch diese Konstrauktion ist die Innenschale 5 relativ zu der Außenschale 6 in gewissem Maße axial verschiebbar.

In Richtung der Stirnseite des Drehteils 2 liegt an der Außenschale 6 des Wellenlagers ein Konterring 10 an. Auf der anderen Seite des Konterrings 10 liegt an dem Konterring ein ringförmiges Piezoelement an, das die Axialverstelleinheit 31 bildet. Auf der anderen Seite des Piezoelements wiederum liegt an dem Piezoelement eine Abdeckplatte 8 an. Die Abdeckplatte 8 ist durch Schrauben 9 mit dem das Wellenlager aufnehmenden und es umgebenden Bauteil 7 verbunden. Durch diese Konstruktion ist die Axialverstelleinheit 31 auf ihrer einen Seite gegen das umgebende Bauteil 7 und auf ihrer andern Seite gegen die Außenschale 4 des Wellenlagers abgestützt.

Das Material der Piezoelemente der Axialverstelleinheit 31 ist in diesem Fall so gewählt, daß sich die axiale Erstreckung der Piezoelemente bei Anlegen einer elektrischen Spannung vergrößert. Bei einer Vergrößerung der Axialerstreckung der Piezoelmente wird der Konterring 10 stärker in Richtung der Außenschale 4 gedrückt und eine entsprechende Kraft übertragen. Von der Außenschale 4 wird die Kraft über die Kugeln 6 auf die Innenschale 5 und hiervon auf den Anschlag des Drehteils 2 übertragen. Durch diesen in Axialrichtung wirkenden Kraftfluß ist das axiale Einspannverhältnis des Drehteils 2 verändert und die Resonanzfrequenz des Drehteils 2 verstimmt, so daß die Übertragungsfunktion gezielt vorzugsweise geräuschminimierend verändert wird.

Bei einem vorliegenden Axialspiel wird in dem eben geschilderten Fall die gesamte Anordnung über den Konterring in Richtung des Anschlags des Drehteils 2 geschoben und das Axialspiel zumindest verringert. Durch die Veränderung der Geometrie der Piezoelemente der Axialverstelleinheit 31 kann daher auch ein ggf. auftretendes Axialspiel ausgeglichen werden.

Desweiteren können die Piezoelemente der Axialverstelleinheit 31 bei einer im Drehteil 2 auftretenden Schwingung durch das Anlegen einer Wechselspannung zu einer Sekundär-Schwingung erregt werden. Die Sekundär-Schwingung wird über die den Kraftfluß leitenden Komponenten auf das Drehteil 2 übertragen und mit der auftretenden Schwingung des Drehteils, insbesondere einer Eigenschwingung des Drehteils 2, interferiert. Durch die Interferenz mit der Sekundär-Schwingung wird die am Drehteil auftretende Schwingung verändert und insbesondere gedämpft.

Die Sekundär-Schwingung wird zweckmäßiger Weise in Abhängigkeit von der auftretenden Schwingung verändert. Hierzu ist es sinnvoll, die auftretenden Schwingung zu aufzunehmen, mittels eines mathematischen Algorithmus - bspw. einer Fourier-Transformation - zu analysieren und dadurch mit entsprechend generierten Datensätzen die halbschaligen Piezoelemente der Axialverstelleinheit 31 zu einer entsprechenden Sekundär-Schwingung zu erregen.

In Figur 2 ist ein weiteres Ausführungsbeispiel einer stirnseitigen Aufnahme eines Drehteils 2 in einem umgebenden Bauteil 7 dargestellt, wobei das hier vorliegende Wellenlager baugleich zu demjenigen nach Figur 1 ist. Das Drehteil 2 weist einen Anschlag auf, an dem sich der Radius sprungartig ändert. Der Anschlag des Drehteils liegt direkt an dem Innenring 5 des Wellenlagers an und ist dadurch in Axialrichtung spielfrei im Wellenlager angeordnet.

Im Unterschied zu dem vorherigen Beispiel ist hier jedoch der ehemalige Konterring und die Abdeckplatte 8 zu einem einzigen Bauteil zusammengefaßt, wobei die Funktion der ehemaligen Konterrings nun von einer Art Dom übernommen, der von der Abdeckplatte 8 in Richtung des Wellenlagers abragt und mit seiner Stirnseite an der Außenschale 4 des Wellenlagers anliegt. Die Axialverstelleinheit 31 ist durch Piezoelemente gebildet, die im Bereich der Schrauben 9 in der Art einer Unterlegscheibe zwischen der Abdeckplatte 8 und dem umgebenden Bauteil 7 angeordnet sind.

Das Material der Piezoelemente die Axialverstelleinheit 31 ist in diesem Fall so gewählt, daß sich die axiale Erstreckung der Piezoelemente bei Anlegen einer elektrischen Spannung verringert, wodurch die mit Vorspannung angezogenen Schrauben 9 die Abdeckplatte 8 stärker in Richtung des Drehteils drücken. Diese Kraft wird über den Dom auf die Außenschale 4 übertragen. Von der Außenschale 4 wird die Kraft über die Kugeln 6 auf die Innenschale 5 und hiervon auf den Anschlag des Drehteils übertragen. Durch diesen in Axialrichtung wirkenden Kraftfluß ist das axiale Einspannverhältnis des Drehteils verändert und die Resonanzfrequenz des Drehteils verstimmt, so daß auch hier die Übertragungsfunktion gezielt geräuschminimierend verändert wird.

Bei einem vorliegenden Axialspiel wird in dem eben geschilderten Fall die gesamte Anordnung über den Dom in Richtung des Anschlags des Drehteils geschoben und das Axialspiel zumindest verringert. Durch die Veränderung der Geometrie der Piezoelemente der Axialverstelleinheit 31 kann daher auch ein ggf. auftretendes Axialspiel ausgeglichen werden.

Desweiteren können die Piezoelemente der Axialverstelleinheit 31 bei einer im Drehteil 2 auftretenden Schwingung durch das Anlegen einer Wechselspannung zu einer Sekundär-Schwingung erregt werden. Die Sekundär-Schwingung wird über die den Kraftfluß leitenden Komponenten auf das Drehteil 2 übertragen und mit der auftretenden Schwingung des Drehteils, insbesondere einer Eigenschwingung des Drehteils 2, interferiert. Durch die Interferenz mit der Sekundär-Schwingung wird die am Drehteil auftretende Schwingung verändert und insbesondere gedämpft.

Die Sekundär-Schwingung wird zweckmäßiger Weise in Abhängigkeit von der auftretenden Schwingung verändert. Hierzu ist es sinnvoll, die auftretenden Schwingung zu aufzunehmen, mittels eines mathematischen Algorithmus - bspw. einer Fourier-Transformation - zu analysieren und dadurch mit entsprechend generierten Datensätzen die halbschaligen Piezoelemente der Axialverstelleinheit 31 zu einer entsprechenden Sekundär-Schwingung zu erregen.

Auf eine aufwendige Aufnahme- und/oder Auswerteelektronik für die auftretenden Schwingung kann in besonderer Weise verzichtet werden, wenn die Datensätze zur Steuerung der Einspannverhältnisse und/oder der Sekundär-Schwingung einem vorzugsweise elektronischen Datenspeicher, in dem zuvor entsprechend exemplarisch ermittelte Datensätze niedergelegt sind, entnommen werden. Insbesondere erfolgt die Entnahme eines jeweiligen Datensatzes in Abhängigkeit eines mit dem Betrieb des Drehteils 2 korrelierten Parameters.

In andere Fällen ist es zweckmäßig, die auftretenden Schwingungen zu ermitteln und die Datensätze für die Sekundär-Schwingung entsprechend der ermittelten Schwingung auszuwählen.

Handelt es sich bei dem Drehteil 2 um ein rotierendes Drehteil, insbesondere um eine Nocken- und/oder Kurbelwelle eines Verbrennungsmotors, ist es sinnvoll, die Einspannverhältnisse und/oder die Sekundär-Schwingungen in Abhängigkeit insbesondere der Drehzahl und/oder des Kurbel- bzw. Nockenwellenwinkels des Verbrennungsmotors zu verändern.

In sinnvoller Weise kann die radiale Verstellung der Axialverstelleinheit 31 und die künstliche Generierung der Sekundär-Schwingung miteinander verbunden werden, wodurch die Vorrichtung bzw. das erfingsgemäße Verfahren flexibler wird.

Die Kombination dieser beiden Verwendungsmöglichkeiten eines erfindungsgemäßen Wellenlagers 3 kann dadurch erfolgen, daß als elektrische Spannung eine Wechselspannung mit einer zusätzlichen Gleichspannung( einer sogenannten Offset-Spannung) verwendet wird.

Die Offset-Spannung regelt die radiale Erstreckung bzw. den radialen Anpreßdruck der halbschaligen Piezoelemente der Axialverstelleinheit 1, während die Wechselspannung die Piezoelemente der Axialverstelleinheit 31 zu der Sekundär-Schwingung erregt. Dadurch führen die halbschaligen Piezoelemente der Axialverstelleinheit 31 eine Sekundär-Schwingung aus, deren Nullpunkt am demjenigen Ort angeordnet ist, der durch die Offset-Spannung festgelegt ist.

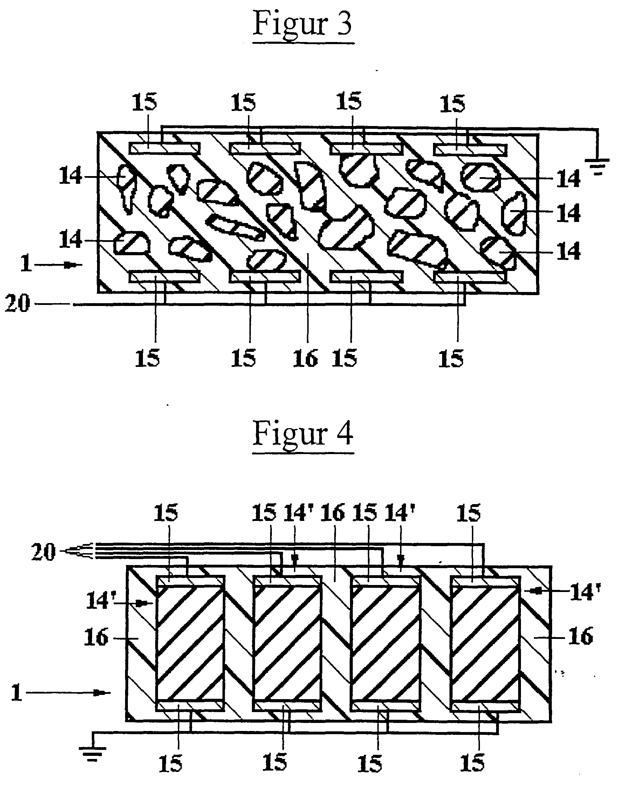

Anstelle der in den Figuren 1 und 2 dargestellten Axialverstelleinheiten 1, die immer aus massiven Piezoelementen gebildet sind, kann eine Axialverstelleinheit 31 in besondere Weise auch als Dichtung ausgeführt sein, in der die Piezoelemente 14, 14', 14'' in einer Kunststoff-Matrix 6 angeordnet sind. Entsprechende Ausführungsbeispiele dieser (aktiven) Dichtungen sind in den Figuren 3 bis 5 dargestellt. Bei diesen Dichtungen ist von Vorteil, daß derartige Axialverstelleinheiten 1 neben der Dichtwirkung auch eine Schutzwirkung auf die Piezoelemente 14, 14', 14'' ausüben, die auf die sie umgebende Kunststoff-Matrix 16 der Dichtung zurückzuführen ist.

Figur 3 zeigt eine Dichtung einer Axialverstelleinheit 31 mit einer Matrix 16 aus vorzugsweise elektrisch leitendem Kunststoff, in den mehrere Piezoelemente 14 in beliebiger Größe, Orientierung und körperlicher Gestaltung eingebettet sind. Eine derartige Anordnung wird i.a. als 0-3-Piezokeramik-Polymer-Komposit bezeichnet. Im Bereich der Wandung der Dichtung sind günstigerweise elektrische Kontakte 15 angeordnet, die durch elektrische Steuerleitungen 20 mit einer Steuereinheit (nicht dargestellt) verbunden sind.

Durch die elektrischen Kontakte 15 können die einzelnen Piezoelemente 14 zum einen gezielt angesteuert werden und zum anderen ist es möglich, eine elektrische Spannung abzugreifen, die z.B. dadurch entstehen kann, das von einem Drehteil 2 übertragenen Schwingungen einen Drucks auf die Piezoelemente 14 ausüben und diese deformieren.

In einem einfachen Fall kann bei einer Dichtung auch auf die elektrischen Kontakte 15 verzichtet werden. In diesem Fall führt eine auf übertragene Schwingungen zurückgehende Deformation der Piezoelemente 14 zwar auch zu einer elektrischen Spannung. Die elektrische Spannung wird hier dann aber in eine Erwärmung der Kunststoff-Matrix 16 der Dichtung umgesetzt, womit das System ebenfalls gedämpft ist.

In Figur 4 ist eine weitere aktive Dichtung einer Axialverstelleinheit 31 mit einer Kunststoff-Matrix 16 dargestellt, in der mehrere Piezoelemente 14' eingebettet sind. Im Gegensatz zu dem Ausführungsbeispiel nach Figur 3 sind diese Piezoelemente 14' von bestimmter Größe und Form und zusätzlich orientiert angeordnet. Eine derartige Anordnung wird i.a. als 1-3-Piezokeramik-Polymer-Komposit bezeichnet.

Die einzelnen Piezoelemente 4' können - je nach Vorteile im jeweiligen Einsatzfall - bspw. massiv sein und/oder aus mehreren aufeinander gelegten Schichten einzelner Lagen von insbesondere folien- und/oder scheibenartigen Piezokeramiken gebildet sein. Gegenüber der massiven Bauweise von Piezoelementen verringert sich bei den Multi-layer-Systemen bei gleicher Beanspruchung und gleicher aktiver Fläche - die Spannung, während sich die Strom erhöht.

Im Bereich der Wandung der Dichtung sind ebenfalls elektrische Kontakte 15 angeordnet, die gleichfalls durch elektrische Steuerleitungen 20 mit einer Steuereinheit (nicht dargestellt) verbunden sind. Im Unterschied zu der Dichtung nach Figur 3 ist bei der Dichtung nach Figur 4 ein jedes Piezoelement 14' einzeln elektrisch kontaktiert und somit auch getrennt einzeln ansteuerbar.

Über die elektrischen Kontakte 15 können die einzelnen Piezoelemente 14' gezielt zu Sekundär-Schwingungen mit gewünschten Frequenzen und Amplituden erregt werden. Die Sekundär-Schwingungen können mit den von dem Drehteil 2 her übertragenen Schwingungen interferiert und/oder diesen überlagert werden. Im Falle einer negativen Interferenz können die zuvor ohne diese Beeinflussung wahrgenommenen Geräusche zumindest verringert werden.

Die Piezoelemente 14' der Dichtung einer Axialverstelleinheit 31 sind vorzugsweise in der Art von Piezostaks ausgebildet und/oder lamellenartig und insbesondere fluchtend hintereinander in der Dichtung angeordnet.

Bei der Herstellung der Dichtung werden die so angeordneten Piezoelemente 14' sinnvollerweise vor dem Einlassen in den die Matrix 16 der Dichtung bildenden Kunststoff noch elektrisch kontaktiert. Damit die Dichtung einer Axialverstelleinheit 31 auch weiterhin ihren üblichen Zweck erfüllt, ist der die Matrix 16 bildende Kunststoff bevorzugt aus einem Polymer und insbesondere aus einem Elastomer gefertigt.

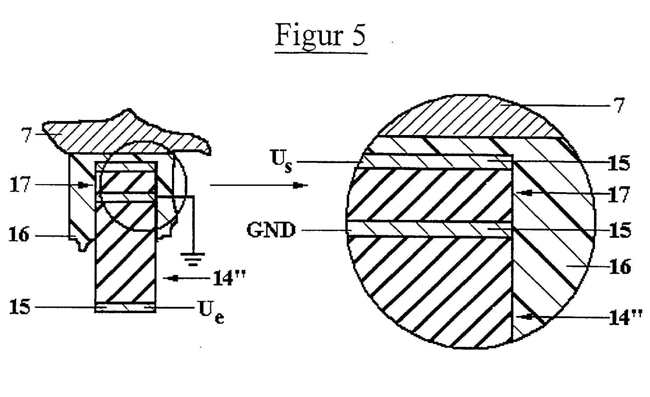

In Figur 5 ist eine aktive Dichtung einer Axialverstelleinheit 31 mit einer Kunststoff-Matrix 16 dargestellt, in der mehrere Piezoelemente 14'' mit zugeordneten piezoelektrischen Sensoren 17 eingebettet sind. Die Piezoelemente 14'' gleichen hinsichtlich der Bauart und der orientierten Anordnung weitgehend denen nach Figur 4.

Allerdings ist ihnen in Richtung ihrer aktiven Achse ein vorzugsweise piezoelektrischer Sensor 17 nachgeordnet. Der Sensor 17 weist einen gemeinsamen und einen zusätzlichen elektrischen Kontakt 15 auf. Der gemeinsame Kontakt 15, der zwischen dem Piezoelement 14'' und dem Sensor 17 angeordnet ist, ist zweckmäßigerweise geerdet bzw. auf ein elektrisches Null-Potential gelegt.

Über die elektrischen Kontakte 15 können die einzelnen Piezoelemente 14'' gezielt zu Sekundär-Schwingungen mit gewünschten Frequenzen und Amplituden erregt werden. Die Sekundär-Schwingungen können mit den von dem Drehteil 2 übertragenen Schwingungen interferiert und/oder diesen überlagert werden.

In vorteilhafter Weise kann bei einer derartigen Dichtung einer Axialverstelleinheit 31 mit dem Sensor 17 eine nach gewünschter Anregung der Piezoelemente 14'' verbleibende Restschwingung ermittelt und entsprechend gesteuert werden. Mit der zugehörigen Elektronik bildet also dieses Piezo-/Sensorelement 4'' einen Regelkreis aus. Aus diesem Grund ist es u.a. günstig, den Sensor 17 in Kraftflußrichtung und/oder parallel zu der Auslenkungsrichtung der zu erwartenden Amplitude bzw. der Moden der übertragenen Schwingung nach dem erregbaren Piezoelement 14'' anzuordnen.

Durch die einzelne elektrische Kontaktierung eines jeden Sensors 17 und der jeweiligen Piezoelemente 14'' kann der Ermittlung der Restschwingung und die Einleitung der Sekundär-Schwingung mit einer guten Auflösung und Flexibilität erfolgen.

## Patentansprüche

1. Verfahren zur Verstimmung der Eigenfrequenz eines Drehteils, welches drehbar in dem Wellenlager gelagert ist, und bei dem die Rotationsachse des Drehteils achsgleich zur Rotationsachse des Wellenlagers angeordnet wird,
**dadurch gekennzeichnet,**
■ daß die axialen und radialen Einspannverhältnisse zwischen dem Wellenlager (3) und einem drehbar in dem Wellenlager (3) gehaltenen Drehteils (2), insbesondere einer Welle, der Maschine verändert werden,
■ daß die Einspannverhältnisse durch eine reversible Änderung der radialen Erstreckung und/oder des Anpreßdrucks an das Drehteil (2) einer aus einem piezoelektrisch aktiven Material gefertigten Radialverstelleinheit (1) verändert werden,
■ daß die Einspannverhältnisse zwischen dem Drehteil (2) und dem Wellenlager (3) gesteuert verändert werden,
■ daß die Einspannverhältnisse zwischen dem Drehteil (2) und dem Wellenlager (3) in Abhängigkeit von Schwingungen, die am Drehteil (2) auftreten, verändert werden und
■ und daß durch die Veränderung der Einspannverhältnisse die zwischen Drehteil (2) und dem Wellenlager (3) bzw. einem das Wellenlager berührenden Bauteils (7) vorliegende Übertragungsfunktion der Schwingungen, insbesondere der Schallwellen erzeugenden Schwingungen, verändert wird.

2. Verfahren nach Anspruch 1,
**dadurch gekennzeichnet,**
daß bei einem Drehteil (2) einer Brennkraftmaschine, insbesondere eines Verbrennungsmotors die Einspannverhältnisse in Abhängigkeit eines Parameters, insbesondere der Drehzahl und/oder dem Kurbelwellenwinkel des Verbrennungsmotors verändert werden.

3. Verfahren nach Anspruch 1,
**dadurch gekennzeichnet,**
daß die Einspannverhältnisse in Abhängigkeit der Temperatur des Drehteils (2) und/oder des Wellenlagers (3) verändert werden.

4. Verfahren nach Anspruch 1,
**dadurch gekennzeichnet,**
daß die Daten zur Steuerung der Einspannverhältnisse einem in einem vorzugsweise elektronischen Datenspeicher niedergelegten Datensatz entnommen werden.

5. Verfahren nach Anspruch 1,
**dadurch gekennzeichnet,**
daß durch die Änderung der Einspannverhältnisse die Eigenfrequenz des Drehteils (2) verändert wird.

6. Stimmbares Drehteil, das in einem Wellenlager drehbar gelagert ist und dessen Rotationsachse achsgleich zur Rotations- bzw. Symmetrieachse des Wellenlagers angeordnet ist,
**dadurch gekennzeichnet,**
daß das Wellenlager (3) eine Axialverstelleinheit (31) aufweist, daß die effektive axiale Erstreckung der Axialverstelleinheit (31) und/oder des axialen Anpreßdruck an das Drehteil (2) im Bereich des zu haltenden Drehteils (2) zumindest zwischen zwei Maßen reversibel veränderbar ist, und daß die Axialverstelleinheit (31) aus einem piezoelektrisch aktiven Material gefertigt ist.

7. Wellenlager nach Anspruch 6,
**dadurch gekennzeichnet,**
daß das Drehteil (2) ein rotierendes Systemelement, vorzugsweise eine Kurbelwelle oder eine Nockenwelle einer Brennkraftmaschine, insbesondere eines Diesel- oder Benzinmotors ist.

8. Wellenlager nach Anspruch 6,
**dadurch gekennzeichnet,**
daß das Drehteil (2) ein rotierendes Systemelement, vorzugsweise eine Welle bzw. ein Rotator eines Elektromotors ist.

9. Wellenlager nach Anspruch 6,
**dadurch gekennzeichnet,**
daß das Drehteil (2) ein rotierendes Systemelement eines Propellers oder eines Düsenantriebs ist.
